Europäisches Patentamt

European Patent Office

Office européen des brevets

(11) Publication number:

**0 220 021**
**A2**

## (12) EUROPEAN PATENT APPLICATION

(21) Application number: **86307762.4**

(22) Date of filing: **08.10.86**

(51) Int. Cl.⁴: **G 06 F 15/24**

(30) Priority: **09.10.85 US 785704**

(43) Date of publication of application:
**29.04.87 Bulletin 87/18**

(84) Designated Contracting States: **DE FR GB IT**

(71) Applicant: **ETHICON INC.**
**U.S. Route 22**
**Somerville New Jersey 08876 (US)**

(72) Inventor: **Calderone, Ronald John**
**RD No. 2 Goldfinch Lane**
**Neshanic Station, NJ (US)**

**Murray, David R.**
**RD No. 3, Box 99**
**Pittstown, NJ (US)**

(74) Representative: **Jones, Alan John et al**
**CARPMAELS & RANSFORD 43 Bloomsbury Square**
**London, WC1A 2RA (GB)**

(54) **Wound closure product inventory management system.**

(57) In combination, in a system for processing, classifying, consolidating and optimizing inventories of wound closure products for inventory accounts, said account comprising a plurality of wound closure products manufactured or supplied by different entities, said products being of various sizes, configurations and materials, said system including an inventory data file means for storing inventory information characterizing the wound closure products in the inventory, first consolidating means for placing said products of different manufacturers or suppliers into common classes and second consolidating means for combining said products by attributes and communication means to communicate said selected, classified, consolidated and optimized inventory.

*FIG-1*

## Description

### WOUND CLOSURE PRODUCT INVENTORY MANAGEMENT SYSTEM

This invention relates to an inventory management system and, more specifically, to data processing methodology and apparatus for effecting an improved inventory management system for wound closure products.

Background of the Invention

Most hospitals presently maintain an extensive inventory of wound closure products for use in the various areas of the hospital such as the operating room, emergency room and the like and for most all of the various specialty surgical areas (i.e., Cardiovascular area, Ob/Gyn area, Neurosurgery area, General Surgery area, and so on). As can be appreciated, this requires an extensive inventory of products so the hospital may be certain they have an appropriate product for each type of procedure. Furthermore, the products themselves are made from various materials, i.e., they may be absorbable or non-absorbable and may be made from either natural or synthetic materials and the products come in various sizes, shapes etc. and if the product is a suture it may be of varying lengths, and either have no needle, one needle or two needles attached to the suture. The products may be packaged in varying numbers where a single product is in a package or ten or more products are in a package and, or course, the sutures are made by various manufacturers. Though the hospital might be able to consolidate its wound closure product inventories in the various areas of the hospital, (i.e., consolidating inventories for the operating room with the emergency rooms, etc.) it is extremely difficult for the hospital to consolidate wound closure products by manufacturers, physical characteristics, material and/or end use.

It is an object of the present invention to provide an improved wound closure product inventory management system.

More specifically, it is an object of the present invention to provide a wound closure product inventory management system which provides for inventory consolidation by eliminating duplication both by manufacturer and by location in the hospital. It is a further object of the present invention to provide an inventory management system which allows consolidation by physical characteristics as well as other attributes. It is also an object of the inventory management system of the present invention to allow for inventory consolidation by operating specialty.

Summary of the Invention

A management system for processing, classifying, consolidating combining and optimizing inventories of wound closure products including sutures and needle-suture combinations for an inventory account. The account includes a plurality of wound closure products manufactured and/or supplied by different entities with the products being of various sizes, configurations and materials and having different medical uses. The management system includes an inventory data file for storing inventory information and characterizing the wound closure products in the inventory. The system includes a first consolidating means for placing the wound closure products of different manufacturers or suppliers into common classes. The system includes selecting means for identifying slow moving products. The system also includes second consolidating means including, classifying means for categorizing products by medical use and by attributes, and combining equivalent products. The system also includes communicating means to communicate said selected, consolidated, classified and optimized inventory.

The foregoing as well as additional features and advantages of the instant invention will become more readily apparent from the following detailed description of a specific illustrative embodiment presented hereinafter in conjunction with the accompanying drawings.

Brief Description of the Drawings

Figure 1 is a schematic flow chart depicting the data processing methodology and structure in accordance with the principal of the present invention for an improved needle, suture inventory management system.

Figure 2 is a schematic flow chart depicting another embodiment of the data processing methodology and structure in accordance with the principals of the present invention for an improved needle suture inventory management system.

Detailed Description of the Drawings

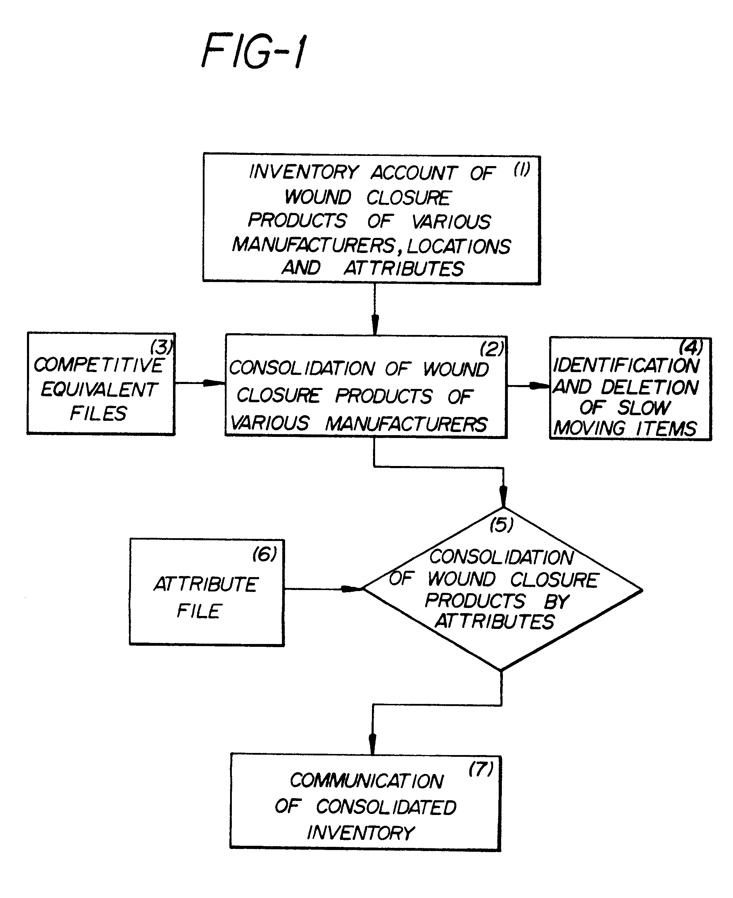

Referring to Fig. 1, there is shown in overall scope a data processing and system operational flow chart for implementing an improved wound closure product inventory management system incorporating the principals of the present invention. As contemplated by the present invention, there are four (4) fundamental aspects of services offered to each inventory system subscriber.

To set up the system, an accounting is taken of the inventory of wound closure products within a given hospital (Box 1). This inventory may be from one location within the hospital or from all the locations in the hospital and include all wound closure products inventoried by the hospital.

A first aspect of the present invention is to consolidate the products of the various manufacturers (Box 2) utilizing a competitive equivalent file (Box 3). Each manufacturer has some type of identification or product code on its product and the product codes are classified by size, length, material, etc. The product codes of the various manufacturers are consolidated so that substantially similar products of the various manufacturers are consolidated into a single identification. If desired, slow moving products may be identified and deleted from the account (Box 4). It is desirable that a minimum level of use be required of the product for it to be maintained in the inventory control system and it is not economical to be concerned with products which have a minimum turnover.

The next and perhaps the most critical aspect of the present invention is to consolidate wound closure products by their various attributes (Box 5). The products may be consolidated by size, shape and design, the material of the product, the length if the product is a suture, the number of product (sutures) in a package, the construction of the suture (whether it be monofilament, multifilament, braided or the like), the color of the product, if a suture whether the suture are unarmed, single-armed or double-armed, whether the suture is a control release suture, etc. Another attribute that may be used to consolidate the product is surgical use: i.e., Cardiovasular, Ophthalmic, Ob/Gyn, General Surgery etc. The products may be consolidated by any one or any number of the various attributes by which they have been classified(Box 6). The final aspect of the present invention is to communicate the consolidated inventory to the user (Box 7) to allow the user to make decisions as to the maintenance of the inventory, including the number of products, dollar reduction which may be attainable, ordering, etc.

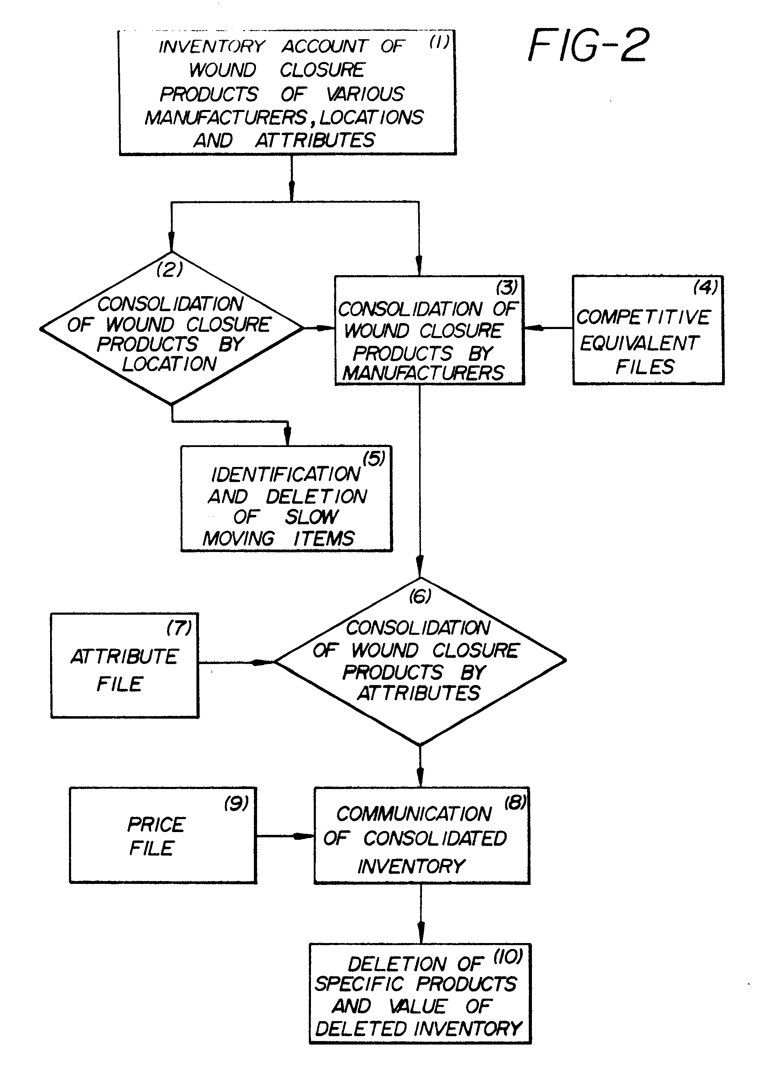

In Fig. 2 there is shown another embodiment of a data processing and system operational flow chart for implementing the improved wound closure product inventory management system incorporating the principals of the present invention. In this embodiment an inventory account of wound closure products is taken of the entire hospital (Box 1). This inventory account may then be consolidated by the products in the various locations of the hospital (Box 2) and/or by consolidating wound closure products by various manufacturers (Box 3). A competitive equivalent file (Box 4) is used to accomplish this step. Once one or both of these consolidations have taken place, the slow moving products may be identified at some given level and may be deleted from the inventory account (Box 5). The inventory account is then consolidated and classified by the attributes of the product. (Box 6), including both physical attributes and medical use attributes using an attribute file (Box 7). Once this classifying and/or consolidation has taken place, the final consolidated inventory may then be communicated to the user (Box 8) who may then make the necessary decisions on the control of its inventory. If desired the user may be able to delete the total inventory from one location in the hospital and consolidate it with other locations. By incorporating price data (Box 9) into the system the user may not only delete items from the inventory but value the deleted inventory (Box 10).

As can be appreciated, the inventory control system of the present invention may greatly reduce the dollar value of the inventory held by the account and will allow a degree of assurance that appropriate wound closure products are in the inventory. Furthermore, this system will allow the account to consolidate wound closure products which are closely related but are not necessarily identical and substitute one product for another product, if desired or if required.

The above-described arrangement is merely illustrative of the principals of the present invention. Numerous modifications and variations thereof will be readily apparent to those skilled in the art without departing from the spirit and scope of the present invention.

## Claims

1. In combination, in a system for processing, classifying, consolidating and optimizing inventories of wound closure products for inventory accounts, said account comprising a plurality of wound closure products manufactured or supplied by different entities, said products being of various sizes, configurations and materials, said system including an inventory data file means for storing inventory information characterizing the wound closure products in the inventory, first consolidating means for placing said products of different manufacturers or suppliers into common classes and second consolidating means for combining said products by attributes and communicating means to communicate said selected, classified, consolidated and optimized inventory.

2. In combination in a system for processing, classifying, consolidating and optimizing inventories of wound closure products for inventory accounts, said account comprising a plurality of said product manufactured or supplied by different entities, said products being of various sizes, configurations and materials and intended for various medical uses, said system including an inventory data file means for storing inventory information characterizing the wound closure products in the inventory, first consolidating means for placing said products of different manufacturers or suppliers into common classes, selecting means for identifying slow moving products, second consolidating means for combining said products by attributes and communicating means to communicate said selected, classified, consolidated and optimized inventory.

3. A combination as in Claim 1 or 2, further comprising means for classifying products by medical use category.

4. A combination as in Claim 1 or 2, further comprising additional consolidating means for combining products by location.

# FIG-1

```
                    ┌─────────────────────────┐
                    │ INVENTORY ACCOUNT OF  (1)│
                    │      WOUND  CLOSURE      │
                    │  PRODUCTS  OF  VARIOUS   │
                    │ MANUFACTURERS, LOCATIONS │
                    │     AND  ATTRIBUTES      │
                    └─────────────────────────┘
                                 │
                                 ▼
┌──────────────┐    ┌─────────────────────────┐    ┌──────────────┐
│          (3) │    │                     (2) │    │          (4) │
│ COMPETITIVE  │───▶│ CONSOLIDATION OF WOUND  │───▶│IDENTIFICATION│
│ EQUIVALENT   │    │ CLOSURE PRODUCTS OF     │    │AND DELETION  │
│ FILES        │    │ VARIOUS  MANUFACTURERS  │    │OF  SLOW      │
└──────────────┘    └─────────────────────────┘    │MOVING ITEMS  │
                                 │                  └──────────────┘
                                 ▼
┌──────────────┐         ╱────────────╲
│         (6)  │        ╱      (5)      ╲
│              │       ╱  CONSOLIDATION  ╲
│ ATTRIBUTE    │─────▶│ OF WOUND CLOSURE   │
│ FILE         │       ╲  PRODUCTS  BY   ╱
│              │        ╲  ATTRIBUTES   ╱
└──────────────┘         ╲────────────╱
                                 │
                                 ▼
                    ┌─────────────────────────┐
                    │  COMMUNICATION      (7) │
                    │  OF  CONSOLIDATED       │
                    │      INVENTORY          │
                    └─────────────────────────┘
```

0220021

FIG-2

INVENTORY ACCOUNT OF (1)
WOUND CLOSURE
PRODUCTS OF VARIOUS
MANUFACTURERS, LOCATIONS
AND ATTRIBUTES

(2) CONSOLIDATION OF WOUND CLOSURE PRODUCTS BY LOCATION

(3) CONSOLIDATION OF WOUND CLOSURE PRODUCTS BY MANUFACTURERS

(4) COMPETITIVE EQUIVALENT FILES

(5) IDENTIFICATION AND DELETION OF SLOW MOVING ITEMS

(7) ATTRIBUTE FILE

(6) CONSOLIDATION OF WOUND CLOSURE PRODUCTS BY ATTRIBUTES

(9) PRICE FILE

(8) COMMUNICATION OF CONSOLIDATED INVENTORY

(10) DELETION OF SPECIFIC PRODUCTS AND VALUE OF DELETED INVENTORY